# EUROPÄISCHE PATENTSCHRIFT

(11) **EP 2 532 395 B1**
(45) Veröffentlichungstag und Bekanntmachung des Hinweises auf die Patenterteilung: **12.04.2017**
(21) Anmeldenummer: 12170910.9
(22) Anmeldetag: 05.06.2012
(51) Int. Cl.: A63B 29/02, F16B 45/02, A62B 35/00

(54) **Karabiner, insbesondere Klettersteigkarabiner**
Karabiner, in particular climbing karabiner
Mousqueton, notamment mousqueton de via ferrata

(30) Priorität: 10.06.2011 DE 102011077431
(43) Veröffentlichungstag der Anmeldung: 12.12.2012
(73) Patentinhaber: Salewa Sportgeräte GmbH, 85609 Aschheim (DE)
(72) Erfinder: Baumgartner, Peter, 81243 Aschheim (DE)
(74) Vertreter: Weickmann & Weickmann PartmbB

(56) Entgegenhaltungen:
- FR-A1- 2 520 712
- JP-A- 2007 117 573
- US-A- 6 161 264

## Beschreibung

Die vorliegende Erfindung betrifft einen Karabiner, welcher einen Hauptbügel und einen schwenkbar zu diesem gehaltenen Schließhebel umfasst, wobei der Schließhebel in einer geschlossenen Stellung des Karabiners eine Öffnung des Hauptbügels schließt und in einer geöffneten Stellung des Karabiners zu einem Innenbereich des Karabiners hin verschwenkt ist, um die Öffnung des Hauptbügels zu öffnen. Aspekte der Erfindung betreffen insbesondere einen Klettersteigkarabiner, der ferner einen Sicherungshebel umfasst, welcher schwenkbar zum Hauptbügel gehalten ist, wobei der Sicherungshebel an einem Schwenkpunkt verschwenkbar ist zwischen einer Sicherungsstellung, in der er eine Schwenkbewegung des Schließhebels von der geschlossenen Stellung in die geöffnete Stellung blockiert, und einer Freigabestellung, in der er eine Schwenkbewegung des Schließhebels von der geschlossenen Stellung in die geöffnete Stellung zulässt.

Karabiner finden als Kopplungselement zur manuellen Herstellung oder Lösung einer Kopplung zwischen zwei Teilen breite Anwendung, insbesondere als Sicherungselement im Bergsport. Mit Karabinern lassen sich zwei oder mehr Sicherungsmittel, wie Seile, Gurte, Schlaufen, Haken, Karabiner, Ösen, Abseilvorrichtungen, sonstige Bergsteigerausrüstung oder alpines Gerät oder dergleichen, mit einer einfachen Handbewegung miteinander verbinden bzw. voneinander lösen. Zumeist ist der Schließhebel in die Schließstellung vorgespannt oder/und mit dem zusätzlichen Sicherungshebel gesichert, um ein unbeabsichtigtes Öffnen des Schließhebels und damit unbeabsichtigtes Entkoppeln der Sicherungsmittel zuverlässig zu verhindern.

Klettersteigkarabiner werden zum Sichern des Bergsteigers an einem Klettersteig verwendet, an welchem bergseitige Sicherungsmittel entlang des Klettersteigs am Felsen befestigt sind, z.B. ein fortlaufendes Sicherungsseil. Der Bergsteiger verwendet hier zumeist zwei Karabiner, welche jeweils mittels eines Gurts an einem Hüftgurt des Bergsteigers gekoppelt sind. Bei der Fortbewegung entlang des Klettersteigs muss der Bergsteiger dann die Klettersteigkarabiner wiederholt mit den bergseitigen Sicherungsmitteln koppeln oder von diesen entkoppeln, wobei stets mindestens einer der beiden Karabinern mit den bergseitigen Sicherungsmitteln gekoppelt sein muss.

Die EP 1 927 767 A1 beschreibt einen Karabiner der vorstehend genannten Art, welcher insbesondere für den Einsatz am Klettersteig geeignet ist. Bei diesem Karabiner wird der Innenbereich des Karabiners durch den Hauptbügel und den Schließhebel begrenzt, wobei der Schließhebel auf einer Seite des Innenbereichs angeordnet ist und auf der gegenüberliegenden Seite ein Sicherungshebel schwenkbar am Hauptbügel gelagert ist. Damit kann der Karabiner in einer Hand des Bergsteigers gehalten werden, so dass der Sicherungshebel am Daumen bzw. in der Handfläche des Benutzers anliegt und der Schließhebel von einem oder mehreren Fingern des Benutzers umgriffen werden kann. Zum Öffnen des Karabiners kann dann mit nur einer Hand der Sicherungshebel in die Freigabestellung verschwenkt werden und der Schließhebel in die geöffnete Stellung verschwenkt werden. Auf diese Weise lässt sich der Karabiner schnell öffnen, wobei durch die Notwendigkeit zweier unterschiedlicher Hebelbewegungen zum Öffnen des Karabiners ein unbeabsichtigtes Öffnen des Karabiners verhindert werden kann. Das Dokument JP2007117573A beschreibt einen ähnlichen Karabiner, der aber größer ausgelegt ist. Dadurch wird es z.B. möglich den Schließhebel mit mehreren Fingern zu betätigen. Der Griffabschnitt des Schließhebels ist als Vertiefung ausgebildet und verhindert dadurch ein Abgleiten der Finger in den Innenbereich des Karabiners.
Trotz des prinzipiell einfachen Funktionsprinzips bekannter Klettersteigkarabiner ist deren Handhabung im praktischen Einsatz noch mit Nachteilen verbunden, die sich insbesondere bei häufigen Öffnungs- und Schließbewegungen, bei schwierigen Witterungsverhältnissen oder bei weniger erfahrenen Bergsteigern zeigen. So ist etwa zum Öffnen des Karabiners eine relativ hohe Druckkraft auf den Schließhebel auszuüben, und zwar während des gesamten Schwenkwegs des Schließhebels. Abhängig vom Schwenkwinkel des Schließhebels liegt der Karabiner dann unterschiedlich gut in der Hand. Während der Karabiner in der geschlossenen Stellung tendenziell nach oben aus der Hand rutscht, gleiten die am Schließhebel anliegenden Finger in der geöffneten Stellung tendenziell in den Innenbereich des Karabiners und über das freie Ende des Schließhebels hinweg. Ferner wurde festgestellt, dass beim Auskopplungsvorgang das Sicherungsmittel auf seinem Weg vom Innenbereich des Karabiners durch die Öffnung des Hauptbügels mit einem Finger des Bergsteigers, der den Schließhebel in der geöffneten Stellung hält, kollidiert. Nach einer hohen Anzahl von Auskopplungsvorgängen kann dies als unangenehm empfunden werden oder gar zu Verletzungen führen, insbesondere wenn das Sicherungsmittel ein Stahlseil eines Klettersteigs ist.

Vor diesem Hintergrund ist es Aufgabe der vorliegenden Erfindung, einen Karabiner, insbesondere einen Klettersteigkarabiner der vorstehend genannten Art, bereitzustellen, welcher einfacher und komfortabler zu handhaben ist und insbesondere auch nach einer hohen Anzahl von Ein- und Auskopplungsvorgängen noch zufriedenstellende Handhabungseigenschaften zeigt.

Nach einem ersten Aspekt der vorliegenden Erfindung wird diese Aufgabe gelöst durch einen Karabiner, welcher einen Hauptbügel und einen schwenkbar zu diesem gehaltenen Schließhebel umfasst, wobei der Schließhebel in einer geschlossenen Stellung des Karabiners eine Öffnung des Hauptbügels schließt und in einer geöffneten Stellung des Karabiners zu einem Innenbereich des Karabiners hin verschwenkt ist, um die Öffnung des Hauptbügels zu öffnen, wobei der Schließhebel einen Griffabschnitt für mindestens einen Finger eines Benutzers aufweist, wobei jedenfalls in der geöffneten Stellung des Karabiners zwischen dem Griffabschnitt und dem Innenbereich des Karabiners eine Fingerbarriere angeordnet ist, welche dafür ausgelegt ist, ein Abgleiten des Fingers in den Innenbereich des Karabiners zu verhindern oder/und den Finger vor einem Kontakt mit einem aus dem Innenbereich des Karabiners austretenden Sicherungsmittel zu schützen.

Nach einem wichtigen Merkmal der Erfindung des ersten Aspekts ist somit eine Fingerbarriere zwischen dem Griffabschnitt des Schließhebels und dem Innenbereich des Karabiners vorgesehen, so dass einerseits die Finger sicher am Griffabschnitt gehalten werden und nicht in den Innenbereich des Karabiners abrutschen können und andererseits beim Auskoppeln des Sicherungsmittels eine Abschirmung oder ein Schutz der Finger des Bergsteigers vor einer Kollision mit dem austretenden Sicherungsmittel bereitgestellt wird. Somit liegt der Karabiner auch in der geöffneten Stellung und bei Ausübung eines hohen Drucks auf den Schließhebel sicher in der Hand und die Finger des Bergsteigers werden beim Auskoppeln des Sicherungsmittels geschützt. Auch nach häufigen Ein- und Auskopplungsvorgängen, bei schwierigen Witterungsverhältnissen oder bei Verwendung durch weniger erfahrene Bergsteiger ist der Karabiner somit mit hohem Komfort zu handhaben.

Die Fingerbarriere kann fest mit dem Griffabschnitt verbunden sein, so dass sie sich bei einer Schwenkbewegung des Schließhebels mitbewegt. Dies ermöglicht eine konstruktiv einfache Gestaltung der Fingerbarriere beispielsweise als Vorsprung oder Stufe am Griffabschnitt, wobei die Höhe des Vorsprungs bzw. der Stufe so gewählt ist, dass der Finger effektiv zurückgehalten werden kann bzw. gegenüber dem Sicherungsmittel abgeschirmt werden kann. Beispielsweise kann die Höhe des Vorsprungs bzw. der Stufe in etwa in der Größenordnung der Dicke eines Fingers liegen.

In einer bevorzugten Ausführungsform der Erfindung ist der Griffabschnitt für die Anlage von mindestens zwei, vorzugsweise mindestens drei nebeneinander liegenden Fingern eines Benutzers ausgelegt, so dass der Schließhebel mit mehreren Fingern und damit zuverlässiger bzw. einfacher in die geöffnete Stellung verschwenkt werden kann.

Alternativ oder zusätzlich zu einer fest mit dem Griffabschnitt verbundenen Fingerbarriere kann eine Fingerbarriere fest mit dem Hauptbügel verbunden sein. Da sich der Schließhebel und damit auch der Griffabschnitt beim Verschwenken in die geöffnete Stellung relativ zum Hauptbügel bewegt, wird sich in dieser Ausführungsform der Griffabschnitt ebenfalls relativ zu der mit dem Hauptbügel verbundenen Fingerbarriere bewegen. Sichergestellt werden sollte dann im Sinne des ersten Aspekts der Erfindung, dass zumindest in der geöffneten Stellung des Karabiners die Fingerbarriere zwischen dem Griffabschnitt und dem Innenbereich des Karabiners angeordnet ist, um die erfindungsgemäße Abschirmung zwischen den Fingern des Benutzers und dem Innenbereich des Karabiners zu erreichen.

In einer konstruktiv besonders einfachen Variante kann eine am Hauptbügel vorgesehene Fingerbarriere durch einen am Hauptbügel angeordneten Vorsprung (Nase oder Stufe) gebildet sein, welcher zur Öffnung des Hauptbügels oder zum Innenbereich des Karabiners hin vorsteht. Der Vorsprung kann insbesondere integral am Hauptbügel geformt sein.

Wenn die Fingerbarriere durch einen am Hauptbügel angeordneten Vorsprung gebildet ist, so kann der Vorsprung ferner in der geöffneten Stellung des Karabiners durch eine Aussparung des Schließhebels hindurchtreten. Dies erlaubt die Verwirklichung der Fingerbarriere im Wesentlichen ohne Vergrößerung der Dicke des Karabiners (in einer Richtung senkrecht zu der durch den Schließhebel und den Hauptbügel aufgespannten Hauptebene des Karabiners).

In einer weiteren Ausführungsform der vorliegenden Erfindung weist eine Begrenzung des Innenbereichs des Karabiners eine Ausweisungskontur auf, welche ein Sicherungsmittel aus dem Innenbereich über die Fingerbarriere hinweg durch die Öffnung des Karabiners ausweist. Beim Auskoppeln des Sicherungsmittel findet das Sicherungsmittel somit seinen Weg aus dem Innenbereich über die Fingerbarriere hinweg, so dass es einerseits leicht und ohne zu verhaken ausgekoppelt werden kann und andererseits sicher an den Fingern des Bergsteigers vorbei geführt wird, ohne mit diesen wesentlich zu kollidieren.

Vorzugsweise geht die Ausweisungskontur kontinuierlich in einen Vorsprung oder eine Stufe über, welcher/welche die Fingerbarriere bildet. Das Sicherungsmittel kann beim Auskoppeln dann an der Ausweisungskontur ohne Störung oder Verhaken entlang über den Vorsprung bzw. die Stufe hinweg gleiten und durch die Öffnung des Karabiners austreten.

Nach einem zweiten Aspekt der vorliegenden Erfindung wird die oben genannte Erfindungsaufgabe gelöst durch einen Karabiner, umfassend: einen Hauptbügel, einen Schließhebel, welcher schwenkbar zum Hauptbügel gehalten ist, wobei der Schließhebel in einer geschlossenen Stellung des Karabiners eine Öffnung des Hauptbügels schließt und in einer geöffneten Stellung des Karabiners zu einem Innenbereich des Karabiners hin verschwenkt ist, um die Öffnung des Hauptbügels zu öffnen, und einen Sicherungshebel, welcher schwenkbar zum Hauptbügel gehalten ist, wobei der Sicherungshebel verstellbar ist, zwischen einer Sicherungsstellung, in der er eine Schwenkbewegung des Schließhebels von der geschlossenen Stellung in die geöffnete Stellung blockiert, und einer Freigabestellung, in der er eine Schwenkbewegung des Schließhebels von der geschlossenen Stellung in die geöffnete Stellung zulässt, wobei in der geschlossenen und gesicherten Stellung des Karabiners sich ein Griffabschnitt des Sicherungshebels und ein Griffabschnitt des Schließhebels parallel zueinander oder in einem Winkel von kleiner oder gleich ungefähr 15° zueinander erstrecken oder/und sich der Griffabschnitt des Sicherungshebels oder/und der Griffabschnitt des Schließhebels in Bezug auf eine Hauptzugachse des Karabiners von einem untere axialen Abschnitt des Karabiners zu einem mittleren axialen Abschnitt des Karabiners hin an die Hauptzugachse annähert.

Der gemäß dem zweiten Aspekt der Erfindung vorgeschlagenen Lösung liegt das erfinderische Konzept zugrunde, bei einem Karabiner mit Sicherungshebel, insbesondere einem Klettersteigkarabiner, die Erstreckungsrichtung des Griffabschnitts des Sicherungshebels bzw. des Schließhebels unter Berücksichtigung der Richtung der zum Entsichern und Öffnen des Karabiners notwendigen Kräfte zu wählen. Insbesondere ist der Verlauf der Griffabschnitte so gewählt, dass bei der Betätigung des Sicherungshebels sowie bei anschließender Betätigung des Schließhebels die vom Benutzer auf den Karabiner übertragene Kraft im Wesentlichen senkrecht zur Hauptzugachse wirkt oder in einer solchen Richtung wirkt, dass der Karabiner weiter in die Hand hineingedrückt wird. In beiden Fällen wird die Wirkung erzielt, dass der Karabiner auch bei Ausübung der zum Öffnen notwendigen Kräfte sicher in der Hand liegt, komfortabel bedient werden kann und auch bei schwierigen Witterungsverhältnissen oder bei Benutzung durch weniger geübte Bergsteiger nicht aus der Hand rutscht. Somit verbessert auch der Karabiner des zweiten Aspekts der Erfindung die Sicherheit und den Komfort der Handhabung des Karabiners.

Der Karabiner des zweiten Aspekts der Erfindung kann vorzugsweise mit einem oder mehreren der vorstehend im Zusammenhang mit dem ersten Aspekt der Erfindung beschriebenen Merkmale weitergebildet sein, um die vorstehend genannten Vorteile und Effekte zu erzielen.

Nach einem dritten Aspekt der Erfindung wird die oben genannte Erfindungsaufgabe gelöst durch einen Karabiner, umfassend: einen Hauptbügel, einen Schließhebel, welcher an einem Schwenkpunkt schwenkbar zum Hauptbügel gehalten ist, wobei der Schließhebel in einer geschlossenen Stellung des Karabiners eine Öffnung des Hauptbügels schließt und in einer geöffneten Stellung des Karabiners zu einem Innenbereich des Karabiners hin verschwenkt ist, um die Öffnung des Hauptbügels zu öffnen, eine Gurtöffnung zur Aufnahme eines Gurts, welche separat von dem Innenbereich des Karabiners ausgebildet ist, wobei in Bezug auf eine Hauptzugachse des Karabiners die Gurtöffnung zwischen dem Schwenkpunkt des Schließhebels und dem Innenbereich des Karabiners oder an gleicher axialer Position wie der Schwenkpunkt des Schließhebels angeordnet ist.

Wichtiges Merkmal der Erfindung gemäß dem dritten Aspekt ist, dass der Schwenkhebel des Schließhebels relativ weit am unteren Ende des Karabiners angeordnet ist, indem die Gurtöffnung des Karabiners noch zwischen dem Schwenkpunkt des Schließhebels und dem Innenbereich des Karabiners oder an gleicher axialer Position wie der Schwenkpunkt des Schließhebels angeordnet ist. Aus zwei Gründen hat auch dieses Merkmal den Effekt der Verbesserung der Handhabbarkeit des Karabiners und der Steigerung der Sicherheit des Bergsteigers. Zum einen geht das Merkmal des dritten Aspekts der Erfindung mit einer Verlängerung des Schließhebels einher, wodurch ermöglicht wird, dass der Schließhebel mit einem oder mehreren Fingern in einem unteren Griffabschnitt des Schließhebels betätigt werden kann, so dass die Finger des Bergsteigers einen relativ großen Abstand von dem Kontaktabschnitt zwischen Schließhebel und Hauptbügel sowie vom Innenbereich des Karabiners haben können. Auf diese Weise kann verhindert werden, dass der Bergsteiger sich im Bereich der Öffnung des Hauptbügels die Finger einklemmt und dass ein aus dem Innenbereich des Karabiners austretende Sicherungsmittel oder ein durch die Öffnung des Hauptbügels eintretendes Sicherungsmittel mit den Fingern kollidiert. Gleichzeitig kann eine relativ große Öffnung des Hauptbügels bereitgestellt werden, ohne den Karabiner insgesamt zu vergrößern.

Der zweite Grund für die Verbesserung der Handhabung und Funktionssicherheit des Karabiners durch die Merkmale des dritten Aspekts der Erfindung ist darin zu sehen, dass der Schwenkpunkt des Schließhebels in Bezug auf die Hauptachse des Karabiners seitlich neben der Gurtöffnung oder seitlich unterhalb der Gurtöffnung angeordnet ist, was zu einer Verbreiterung des Karabiners am unteren Ende in einer Richtung senkrecht zur Hauptzugachse führt. Damit liegt der Karabiner wesentlich besser in der Hand und insbesondere kann der bei im Wesentlichen V-förmigen Karabinern des Stands der Technik feststellbaren Tendenz, dass der Karabiner nach oben aus der Hand rutscht (insbesondere bei Kraftausübung zum Öffnen des Karabiners), entgegengewirkt werden.

Die Vorteile der Erfindung des dritten Aspekts kommen besonders bei einem Klettersteigkarabiner zum Tragen, insbesondere bei einem Karabiner mit einem Sicherungshebel, welcher schwenkbar zum Hauptbügel gehalten ist, wobei der Sicherungshebel an einem Schwenkpunkt verschwenkbar ist zwischen einer Sicherungsstellung, in der er eine Schwenkbewegung des Schließhebels von der geschlossenen Stellung in die geöffnete Stellung blockiert, und einer Freigabestellung, in der er eine Schwenkbewegung des Schließhebels von der geschlossenen Stellung in die geöffnete Stellung zulässt, wobei in Bezug auf die Hauptzugachse des Karabiners die Gurtöffnung zwischen dem Schwenkpunkt des Sicherungshebels und dem Innenbereich des Karabiners oder an gleicher axialer Position wie der Schwenkpunkt des Sicherungshebels angeordnet ist. Sowohl der Schwenkpunkt des Schließhebels als auch der Schwenkpunkt des Sicherungshebels liegen bei dieser Ausführungsform somit in Bezug auf die Hauptzugachse jeweils seitlich auf unterschiedlichen Seiten der Gurtöffnung bzw. seitlich unterhalb der Gurtöffnung, so dass der Sicherungshebel verlängert werden kann und die Breite des Karabiners im unteren Abschnitt vergrößert wird, wodurch der Karabiner besser in der Hand liegt und auch im Dauereinsatz komfortabel und sicher zu bedienen ist.

Ein Karabiner des dritten Aspekts der Erfindung kann durch eines oder mehrere der Merkmale des ersten oder/und des zweiten Aspekts der Erfindung weitergebildet werden, um die vorstehend im Zusammenhang mit diesen Aspekten genannten Vorteile zu erzielen.

Nach einem vierten Aspekt der Erfindung wird die Erfindungsaufgabe gelöst durch einen Karabiner, welcher einen Hauptbügel und einen schwenkbar zu diesem gehaltenen Schließhebel umfasst, wobei der Schließhebel in einer geschlossenen Stellung des Karabiners eine Öffnung des Hauptbügels schließt und in einer geöffneten Stellung des Karabiners zu einem Innenbereich des Karabiners hin verschwenkt ist, um die Öffnung des Hauptbügels zu öffnen, wobei in einer vollständig geöffneten Stellung des Karabiners ein freies Ende des Schließhebels an einer dem Schließhebel gegenüberliegenden Innenseite des Hauptbügels anschlägt, wobei in einer vollständig geöffneten Stellung des Karabiners eine Begrenzungskontur, welche den Innenbereich des Karabiners begrenzt, im Wesentlichen kontinuierlich von der Innenseite des Hauptbügels in eine Oberfläche des freien Endes des Schließhebels übergeht.

Gemäß dem vierten Aspekt der Erfindung geht somit die Begrenzungskontur des Innenbereichs des Karabiners in der vollständig geöffneten Stellung kontinuierlich vom Hauptbügel zum Schließhebel über. Damit kann erreicht werden, dass ein im Innenbereich des Karabiners aufgenommenes Sicherungsmittel beim Auskoppeln nicht an einem Übergangsbereich zwischen dem Hauptbügel und dem Schließhebel hängenbleibt und stattdessen entlang der Begrenzungskontur des Innenbereichs problemlos abgleiten und durch die Öffnung des Hauptbügels aus dem Karabiner herausgleiten kann. Das Auskoppeln des Sicherungsmittels wird somit erleichtert und die Handhabung des Karabiners wird vereinfacht.

Die kontinuierliche Ausbildung des Übergangsbereich zwischen Hauptbügel und vollständig geöffnetem Schließhebel kann in konstruktiv einfacher Weise dadurch realisiert werden, dass mindestens eines der beiden Elemente Schließhebel und Hauptbügel eine Aussparung aufweist, in welcher ein Abschnitt des anderen der beiden Elemente beim Verschwenken des Schließhebels in die vollständig geöffnete Stellung eindringt. Durch diese Maßnahme kann der zusätzliche Effekt erzielt werden, dass das freie Ende des Schließhebels am Hauptbügel in der vollständig geöffneten Stellung formschlüssig gehalten oder geführt wird, so dass der Schließhebel in Bezug auf eine ungewollte Kipp- oder Schwenkbewegung in einer Richtung senkrecht zur Hauptebene des Karabiners stabilisiert wird.

Der Karabiner gemäß dem vierten Aspekt der Erfindung kann vorteilhaft mit mindestens einem der vorstehend genannten Merkmale des ersten, zweiten oder/und dritten Aspekts der Erfindung weitergebildet werden, um die genannten Vorteile und Effekte zu erzielen. Insbesondere kann auch der Karabiner des vierten Aspekts, so wie die Ausführungsformen gemäß der Aspekte eins bis drei, ein Klettersteigkarabiner sein und einen Sicherungshebel der oben beschriebenen Art aufweisen. Die vorstehend genannten Vorteile einer bequemeren, einfachen und sicheren Handhabung des Karabiners kommen bei einem Klettersteigkarabiner besonders zur Geltung, da Klettersteigkarabiner üblicherweise während der Fortbewegung am Klettersteig sehr häufig geschlossen und geöffnet werden müssen und das Sicherungsmittel, insbesondere ein am Fels befestigtes Klettersteigseil, sehr häufig ein- und ausgekoppelt werden muss.

Die Erfindung wird nachfolgend anhand bevorzugter Ausführungsbeispiele unter Bezugnahme auf die beigefügten Zeichnungen näher erläutert. Es zeigen:
- Figuren 1 a und 1 b: perspektivische Ansichten eines Klettersteigkarabiners gemäß einem ersten Ausführungsbeispiel der Erfindung,
- Figuren 2a bis 2c: eine untere Ansicht, eine Draufsicht sowie eine Schnittdarstellung gemäß eine Schnittlinie A-A des Klettersteigkarabiners des ersten Ausführungsbeispiels in einer geschlossenen Stellung,
- Figuren 3a bis 3c: eine untere Ansicht, eine Draufsicht und eine Schnittdarstellung gemäß einer Schnittlinie B-B des Klettersteigkarabiners des ersten Ausführungsbeispiels in einer vollständig geöffneten Stellung,
- Figuren 4a bis 4c: perspektivische Ansichten eines Klettersteigkarabiners nach einem zweiten Ausführungsbeispiel der Erfindung, einschließlich einer vergrößerten Darstellung eines Abschnitts C,
- Figuren 5a bis 5c: eine untere Ansicht, eine Draufsicht sowie eine Schnittdarstellung gemäß einer Linie D-D des Klettersteigkarabiners des zweiten Ausführungsbeispiels in einer geschlossenen Stellung, und
- Figuren 6a bis 6c: eine untere Ansicht, eine Draufsicht und eine Schnittdarstellung gemäß einer Linie E-E des Klettersteigkarabiners des zweiten Ausführungsbeispiels in einer vollständig geöffneten Stellung.

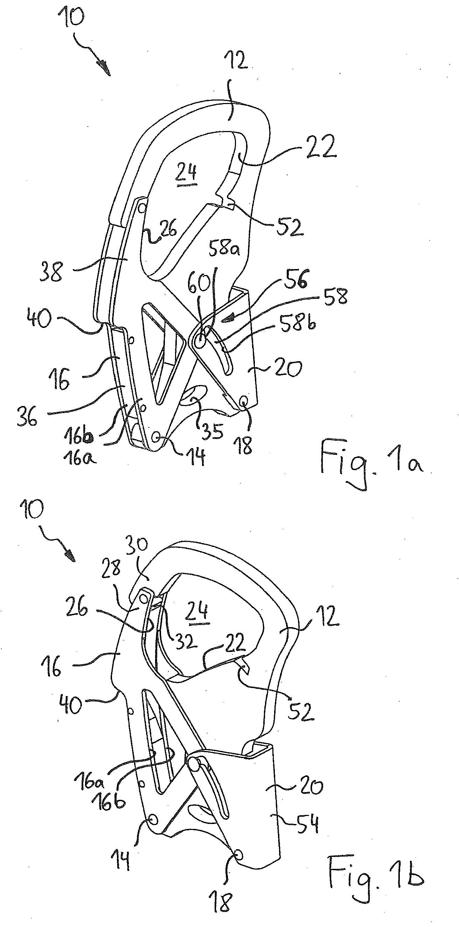

Unter Bezugnahme auf Figuren 1a bis 3c wird zunächst ein Klettersteigkarabiner 10 des ersten Ausführungsbeispiels der Erfindung näher erläutert. Der Klettersteigkarabiner 10 umfasst einen Hauptbügel 12, einen an einem Schwenkpunkt 14 schwenkbar gehaltenen Schließhebel 16 und einen an einen Schwenkpunkt 18 schwenkbar gehaltenen Sicherungshebel 20. Der Hauptbügel 12 hat die allgemeine Form eines Hakens mit einer Öffnung 21, so dass er einen Teil einer Begrenzungskontur 22 für einen Innenbereich 24 des Klettersteigkarabiners 10 bildet. Die Begrenzungskontur 22 wird vervollständigt durch eine Innenseite 26 des Schließhebels 16, welcher die Öffnung 21 schließt. In der in Figuren 1a bis 2c gezeigten geschlossenen Stellung des Karabiners 10 ist die innere Begrenzungskontur 22 des Innenbereichs 24 eine im Wesentliche vollständig geschlossene, umlaufende Ringkontur, so dass ein durch den Innenbereich 24 hindurchgeführtes Sicherungsmittel (nicht dargestellt) durch den Karabiner 10 gesichert bzw. eingekoppelt ist.

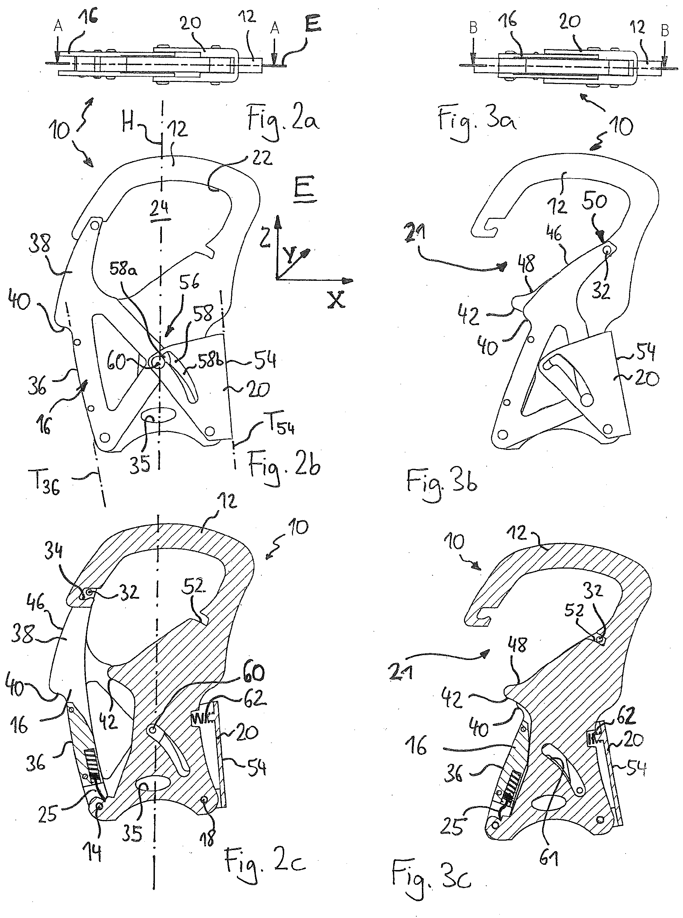

Durch eine Schließhebelfeder 25 (Figuren 2c und 3c), welche im Ausführungsbeispiel eine Blattfeder sein kann, ist der Schließhebel 16 in die geschlossene Stellung vorgespannt, in welcher ein freies Ende 28 des Schließhebels 16 an einem freien Ende 30 des Hauptbügels 12 anschlägt. Das freie Ende 28 des Schließhebels 16 kann dabei mit dem freien Ende 30 des Hauptbügels 12 formschlüssig in Eingriff treten, um den Klettersteigkarabiner 10 in der geschlossenen Stellung mechanisch zu stabilisieren und insbesondere auf den Hauptbügel 12 einwirkende Zugkräfte auch in den Schließhebel 16 einzuleiten und von diesem aufnehmen zu lassen. Im illustrierten Ausführungsbeispiel greift ein Vorsprung oder Steg 32, welcher am freien Ende 28 des Schließhebels 16 ausgebildet ist und im Wesentlichen senkrecht zur Hauptebene E des Klettersteigkarabiners 10 verläuft, in eine passende Ausnehmung oder Nut 34, welche an einer dem Innenbereich 24 zugewandten Innenseite des freien Endes 30 des Hauptbügels 12 eingebracht ist. Vorzugsweise ist der Steg 32 gleichzeitig stabilisierende Verbindung zwischen zwei den Schließhebel 16 bildenden, länglichen, parallelen Platten 16a, 16b, welche die Herstellung des Schließhebels 16 mit geringem Gewicht ermöglichen.

Unterhalb des Innenbereichs 24 weist der Klettersteigkarabiner 10 vorzugsweise eine Gurtöffnung 35 auf, welche für die Durchführung eines Gurts oder Seils oder dergleichen ausgelegt ist, mit dem der Klettersteigkarabiner 10 während der Nutzung dauerhaft verbunden ist. Wie im Ausführungsbeispiel illustriert kann die Gurtöffnung 35 eine von dem Innenbereich 24 separate Öffnung sein, um den durch diese hindurchgeführten Gurt von dem ein- und auszukoppelnden Sicherungsmittel getrennt zu halten, so dass die beiden Sicherungsmittel sich beim Ein- und Auskoppeln nicht gegenseitig behindern.

Von allen Verbindungslinien zwischen einem Punkt im Innenbereich 24 und einem Punkt in der Gurtöffnung 35 definiert die Verbindungslinie mit maximaler Länge eine Hauptzugachse H des Klettersteigkarabiners 10. Entlang dieser Hauptzugachse H verläuft die Zugrichtung oder Kraftrichtung zwischen einem in der Gurtöffnung 35 aufgenommenen Gurt und einem im Innenbereich 24 aufgenommenen Sicherungsmittel, wenn der Gurt und das Sicherungsmittel voneinander weg gezogen werden. In der vorliegenden Offenbarung werden die Richtungsangaben wie "oben" und "unten" in Bezug auf die Hauptzugachse H derart definiert, dass der Innenbereich 24 oberhalb der Gurtöffnung 35 liegt. Ferner liegt die Hauptzugachse H in der Hauptebene E des Klettersteigkarabiners 10, innerhalb welcher auch die Begrenzungskontur 22 des Innenraums 24 verläuft. Eine X-Richtung des Klettersteigkarabiners 10 verläuft orthogonal zur Hauptzugachse H und liegt innerhalb der Hauptebene E, eine Y-Richtung verläuft orthogonal zur X-Richtung und orthogonal zur Hauptebene E und eine Z-Richtung verläuft in Richtung der Hauptzugachse H nach oben.

Der Schließhebel 16 des Ausführungsbeispiels ist in Z-Richtung zwischen dem Schwenkpunkt 14 und dem freien Ende 28 in einen unteren Abschnitt, der einen Griffabschnitt 36 bildet, und einen oberen Abschnitt, der einen Öffnungsabschnitt 38 bildet, unterteilt. Der Griffabschnitt 36 ist dafür ausgelegt, von den Fingern eines Bergsteigers ergriffen zu werden, um den Schließhebel 16 in die geöffnete Stellung zu verschwenken, während der Öffnungsabschnitt 38 insbesondere in der geöffneten Stellung (Figuren 3a bis 3c) näher am Innenbereich 24 des Karabiners 10 liegt und damit in Kontakt mit einem am Karabiner 10 gehaltenen Sicherungsmittel gelangen kann. Durch Bereitstellung des Öffnungsabschnitts 38 kann somit der Schließhebel 16 im sicheren Abstand von der Öffnung 21 des Karabiners 10 betätigt werden.

Am Übergang vom Griffabschnitt 36 zum Öffnungsabschnitt 38 ist eine erste Fingerbarriere 40 in Form einer vom Griffabschnitt 36 zum Öffnungsabschnitt 38 hin ansteigenden Stufe vorgesehen, welche dafür ausgelegt ist, ein Abgleiten oder Abrutschen der am Griffabschnitt 36 gehaltenen Finger nach oben auf den Öffnungsabschnitt 38 bzw. zum Innenbereich 24 des Karabiners 10 hin zu verhindern. Die Kontur der ersten Fingerbarriere 40 ist insbesondere in etwa an die Form eines menschlichen Fingers angepasst, um den Finger zuverlässig zurückhalten zu können. Insbesondere ist die Stufe der ersten Fingerbarriere 40 auch so geformt bzw. von solcher Höhe, dass der Finger des Bergsteigers auch dann zuverlässig zurückgehalten wird, wenn der Schließhebel 16 teilweise oder vollständig in die geöffnete Stellung verschwenkt ist.

Im ersten Ausführungsbeispiel der Erfindung kann ferner eine zweite Fingerbarriere 42 vorgesehen sein, welche fest mit dem Hauptbügel 12 verbunden ist und nur in der geöffneten, insbesondere vollständig geöffneten Stellung des Schließhebels 16 (Figuren 3a bis 3c) eine solche Position in Bezug auf den Griffabschnitt 36 erreicht, dass sie ein Abgleiten des Fingers in den Innenbereich 24 des Karabiners verhindert bzw. den Finger vor einem Kontakt mit einem aus dem Innenbereich 24 des Karabiners 10 austretenden Sicherungsmittel schützt.

Die zweite Fingerbarriere kann als Vorsprung, insbesondere materialeinheitlicher Vorsprung, von dem Hauptbügel 12 aus nach Innen, d.h. in Richtung des Innenbereichs 24 oder zur Öffnung 21 des Hauptbügels 12 hin vorstehen. In Figuren 3b und 3c ist der Vorsprung der zweiten Fingerbarriere 42 in einem unteren Bereich des Innenbereichs 24 vorgesehen und weist in etwa entgegengesetzt zur X-Richtung.

Während der Schwenkbewegung des Schließhebels 16 von der geschlossenen Stellung in die geöffnete Stellung bewegt sich der Schließhebel 16 an der zweiten Fingerbarriere 42 vorbei. Während in der geschlossenen Stellung die Öffnung 21 des Hauptbügels 12 durch den Öffnungsabschnitt 38 des Schließhebels 16 verschlossen ist, ist der Schließhebel 16 in der geöffneten Stellung nach innen soweit weggeschwenkt, dass die Öffnung 21 geöffnet ist. Die Öffnung 21 ist dann einerseits durch das freie Ende 30 des Hauptbügels 12 und andererseits durch die zweite Fingerbarriere 42 begrenzt (Figuren 3b und 3c). Die Finger des Bergsteigers liegen hinter der ersten Fingerbarriere 40 sowie hinter der zweiten Fingerbarriere 42, d.h. auf der anderen Seite des Vorsprungs der zweiten Fingerbarriere 42 als die Öffnung 21. Mit anderen Worten ist die erste Fingerbarriere 40 bzw. die zweite Fingerbarriere 42 zwischen den Fingern des Benutzers und der Öffnung 21 des Hauptbügels bzw. zwischen den Fingern des Benutzers und dem Innenbereich 24 des Karabiners angeordnet. Die Finger des Benutzers können somit vor mechanischer Kollision mit dem ein- oder auskoppelnden Sicherungsmittel geschützt oder abgeschirmt werden.

Eine mögliche technische Realisierung zur Vorbeiführung des Schließhebels 16 an der zweiten Fingerbarriere 42 kann den Aufbau des Schließhebels 16 aus den beiden Platten 16a, 16b ausnutzen. Die Platten 16a, 16b sind beispielsweise am oberen freien Ende 28 des Schließhebels 16 sowie am Schwenkpunkt 14 des Schließhebels 16 durch den Steg 32 bzw. eine Schwenkachse des Schwenkpunkts 14 in einem konstanten Abstand miteinander verbunden, so dass sie parallel zueinander verlaufen. Zwischen dem Steg 32 und dem Schwenkpunkt 14 verlaufen die Platten 16a, 16b somit im Abstand voneinander und bilden eine Aussparung, durch welche die zweite Fingerbarriere 42 des Hauptbügels 12 hindurchtreten kann. Bei der Schwenkbewegung des Schließhebels 16 von der geschlossenen Stellung in die vollständig geöffnete Stellung tritt somit der Vorsprung der zweiten Fingerbarriere 42 zwischen den Platten 16a, 16b hindurch, bis er über den Schließhebel 16 übersteht, insbesondere sogar weiter übersteht als die Stufe der ersten Fingerbarriere 40.

Vorzugsweise legt sich der Schließhebel 16 in der vollständig geöffneten Stellung soweit an eine Innenseite des Hauptbügels 12 auf der der Öffnung 21 gegenüberliegenden Seite an, dass in diesem Kontaktbereich die Begrenzungskontur 22 kontinuierlich von der Innenseite des Hauptbügels 12 zu einer Außenseite 46 des Schließhebels 16, insbesondere in die Außenseite 46 des Öffnungsabschnitts 38 des Schließhebels 16 übergeht. Darüber hinaus ist der Vorsprung der zweiten Fingerbarriere 42 so geformt, dass ein dem Innenbereich 24 zugewandter Rücken 48 der zweiten Fingerbarriere 42 in der vollständig geöffneten Stellung des Schließhebels 16 kontinuierlich in die Außenseite 46 des Schließhebels 16 übergeht. Der Klettersteigkarabiner 10 weist dann in der vollständig geöffneten Stellung eine durchgehend kontinuierliche, d.h. stufenfreie und ohne wesentliche Kanten geformte Ausweisungskontur 50 von der Innenseite des Hauptbügels 12 über die Außenseite 46 des Schließhebels 16 und den Rücken 48 der zweiten Fingerbarriere 42 auf. Damit kann erreicht werden, dass beim Auskoppeln eines Sicherungsmittels das Sicherungsmittel ohne zu verhaken aus dem Innenbereich 24 entlang der Ausweisungskontur 50 aus dem Karabiner 10 austreten kann und dabei gleichzeitig durch die zweite Fingerbarriere 42 über die Finger des Benutzers hinweg geführt wird, so dass es leicht auskoppelt, ohne mit den Fingern des Benutzers zu kollidieren.

Die kontinuierliche Aüsweisungskontur 50 kann im Ausführungsbeispiel dadurch erreicht werden, dass sich auch der Rücken 48 der zweiten Fingerbarriere 42 sowie ein Teil des sich daran anschließenden inneren Abschnitts des Hauptbügels 12 zwischen die parallelen Platten 16a, 16b des Schließhebels 16 einschiebt, so dass sich ein signifikanter Abschnitts des gesamten Schließhebels 16 beiderseits des Hauptbügels 12 vorbei schiebt.

Darüber hinaus kann an der Innenseite des Hauptbügels 12 eine Aussparung 52 angeordnet sein, welche dafür ausgelegt ist, in der vollständig geöffneten Stellung des Schließhebels 16 den Steg 32 des freien Endes 28 aufzunehmen. Die Aussparung 52 kann in der Form einer Nut ausgebildet sein, so dass ein Boden dieser Nut gleichzeitig als Anschlag für den Steg 32 dient und einen Anschlag für den Schließhebel 16 in der vollständig geöffneten Stellung festlegt. Dieser Anschlag kann dann so gewählt werden, dass in der vollständig geöffneten Stellung die Außenseite 46 des Schließhebels 16 gerade kontinuierlich in die Kontur der Innenseite des Hauptbügels 12 übergeht, um die oben diskutierte Ausweisungskontur 50 zu bilden.

Der Sicherungshebel 20 ist in der Hauptebene E des Klettersteigkarabiners 10 verschwenkbar gelagert zwischen einer in Figuren 1a bis 2c gezeigten Sicherungsstellung und einer in Figuren 3a bis 3c gezeigten Freigabestellung. Die Drehachse des Schwenkpunkts 18 des Sicherungshebels 20 verläuft im Wesentlichen parallel zur Drehachse des Schwenkpunkts 14 des Schließhebels 16 in Y-Richtung, die Schwenkpunkte 14, 18 liegen jedoch auf gegenüberliegenden Seiten der Hauptzugachse H. Von dem Schwenkpunkt 18 aus erstreckt sich der Sicherungshebel 20 im Wesentlichen nach oben, wobei an seiner Außenseite ein Griffabschnitt 54 gebildet ist. Der Griffabschnitt 54 des Sicherungshebels 20 ist vom Griffabschnitt 36 des Schließhebels 16 abgewandt.

Der Sicherungshebel 20 steht über eine Verriegelungsanordnung 56 in Verbindung mit dem Schließhebel 16. Die Verriegelungsanordnung 56 ist dafür eingerichtet, den Schließhebel 16 in seiner geschlossenen Stellung zu sichern oder zu verriegeln, so dass der Schließhebel ohne vorherige Entsicherung durch den Sicherungshebel 20 nicht in die geöffnete Stellung verschwenkt werden kann. Im Ausführungsbeispiel umfasst die Verriegelungsanordnung 56 eine Kulisse 58 und einen in der Kulisse 58 geführten Kulissenfolger 60, wobei eines der beiden Elemente aus Kulisse 58 und Kulissenfolger 60 an einem der beiden Bauteile aus Sicherungshebel 20 und Schließhebel 16 angeordnet ist und das andere der beiden Elemente am jeweils anderem Bauteil angeordnet ist. Im gezeigten Ausführungsbeispiel ist die Kulisse 58 am Sicherungshebel 20 ausgebildet und weist L-förmige Form mit einem ersten Kulissenabschnitt 58a und einem sich in einem Winkel daran anschließenden zweiten Kulissenabschnitt 58b auf, während der Kulissenfolger 60 am Schließhebel 16 befestigt ist. Ist der Schließhebel 16 aus den beiden Platten 16a, 16b aufgebaut, so kann der Kulissenfolger 60 gleichzeitig einen Befestigungssteg oder Stabilisierungssteg bilden, welcher die Platten 16a, 16b zueinander parallel hält und eine entsprechende Aussparung 61 des Hauptbügels durchsetzt.

Während der Schwenkbewegung des Schließhebels 16 von der geschlossenen Stellung in die geöffnete Stellung bewegt sich der Kulissenfolger 60 in dem zweiten Kulissenabschnitt 58b, welcher eine dem Schwenkweg entsprechende Krümmung aufweist. Befindet sich der Schließhebel 16 jedoch in der geschlossenen Stellung, so kann der Kulissenfolger 60 in den ersten Kulissenabschnitt 58a eintreten. Eine Sicherungsfeder 62, welche den Sicherungshebel 20 in seine Sicherungsstellung vorspannt, übt in der geschlossenen Stellung eine solche Kraft auf die Verriegelungsanordnung 56 aus, dass der Kulissenfolger 60 von dem zweiten Kulissenabschnitt 58b weggedrückt und in den ersten Kulissenabschnitt 58a hineingedrückt wird. Dieser Zustand ist die Sicherungsstellung des Sicherungshebels 20, in welcher der Sicherungshebel 20 von der Hauptzugachse H weg verschwenkt ist (Figuren 2b und 2c). In der Sicherungsstellung des Sicherungshebels 20 wird der Kulissenfolger 60 daran gehindert, in den zweiten Kulissenabschnitt 58b einzutreten, so dass der Schließhebel 16 daran gehindert wird, in die geöffnete Stellung zu verschwenken und der Karabiner 10 somit gesichert ist.

Zum Entsichern des Schließhebels wird der Sicherungshebel 20 von der Hand des Bergsteigers entgegen der Kraft der Sicherungsfeder 62 zur Hauptzugachse H hin verschwenkt, so dass der Kulissenfolger 60 entlang des ersten Kulissenabschnitts 58a verschoben wird, bis er in den zweiten Kulissenabschnitt 58b eintreten kann. Der Kulissenfolger 60 kann sich dann entlang des zweiten Kulissenabschnitts 58b verschieben (Entsicherungsstellung des Sicherungshebels 20), so dass sich der Schließhebel 16 öffnen lässt.

In Figuren 2b und 2c ist zu erkennen, dass in der geschlossenen und gesicherten Stellung des Karabiners 10 eine Erstreckungsrichtung T₃₆ des Griffabschnitts 36 des Schließhebels 16 im Wesentlichen parallel oder in einem Winkel von ≤15° zu einer Erstreckungsrichtung T₅₄ des Griffabschnitts 54 des Sicherungshebels 20 verläuft. Insbesondere beträgt der Winkel zwischen den Erstreckungsrichtungen T₃₆ und T₅₄ im Ausführungsbeispiel etwa 6°. Im Falle eines nicht ebenen, gekrümmten oder gewellten Griffabschnitts kann die Erstreckungsrichtung als eine Richtung orthogonal zu einem Mittelwert aller Normalenvektoren an den Krümmungsabschnitten des Griffabschnitts oder als durchschnittliche Erstreckungsrichtung aufgefasst werden, wie im Ausführungsbeispiel für den leicht gekrümmten Griffabschnitt 36 illustriert ist.

Ferner ist zu erkennen, dass im Ausführungsbeispiel die Erstreckungsrichtung T₅₄ des Griffabschnitts 54 des Sicherungshebels 20 etwas schräg zur Hauptzugachse H verläuft, derart, dass sich der Griffabschnitt 54 vom Schwenkpunkt 18 aus nach oben zunehmend an die Hauptzugachse H annähert. Darüber hinaus befinden sich die Schwenkpunkte 14 und 18 des Schließhebels 16 bzw. des Sicherungshebels 20 in Bezug auf die Hauptzugachse H jeweils auf gegenüberliegenden Seiten seitlich neben der Gurtöffnung 35.

Durch die so gewählten Erstreckungsrichtungen T₃₆ und T₅₄ der Griffabschnitte 36, 54 sowie die Anordnung der Schwenkpunkte 14, 18 neben der Gurtöffnung 35 ergibt sich im Bereich der Griffabschnitte 36, 54 in der Hauptebene E in etwa eine rechteckförmige Außenkontur des Karabiners 10, die es einerseits ermöglicht, dass der Karabiner 10 gut in der Hand liegt und welche andererseits den Effekt erzielt, dass die Richtungen der auf den Griffabschnitt 36 sowie den Griffabschnitt 54 auszuübenden Betätigungskräfte zum Öffnen des Karabiners 10 im Wesentlichen aufeinander zu gerichtet sind, so dass bei der Betätigung des Karabiners im Wesentlichen keine Kraftkomponente in Richtung der Hauptzugachse H wirkt, welche tendenziell den Karabiner aus der Hand herausgleiten lassen würde. Die auf die Griffabschnitte 36, 54 auszuübenden Betätigungskräfte können sich somit gegenseitig aufheben, so dass der Karabiner 10 sicher in der Hand liegt.

Ferner sind die Schwenkpunkte 14, 18 des Schließhebels 16 bzw. des Sicherungshebels 20 in Bezug auf die Hauptachse H unterhalb der Gurtöffnung 35 angeordnet, d.h. die Gurtöffnung 35 liegt in Bezug auf die Hauptzugachse H zwischen den Schwenkpunkten 14, 18 und dem Innenbereich 24 des Karabiners 10. Durch diese Maßnahme kann die Länge des Schließhebels 16 vom Schwenkpunkt 14 bis zum freien Ende 28 vergrößert werden, so dass am Schließhebel 16 ein Griffabschnitt 36 ausreichender Größe zur Aufnahme von mindestens einem, vorzugsweise zwei oder mehreren Fingern bereitgestellt werden kann, während gleichzeitig ein signifikanter Abschnitt des Schließhebels 16 (z.B. etwa ein Drittel oder etwa die Hälfte der Gesamtlänge des Schließhebels 16) als Öffnungsabschnitt 38 verwendet werden kann, der die mechanische Kopplung mit dem Hauptbügel 12 sowie die Führung des ein- oder auskoppelnden Sicherungsmittels übernehmen kann. Die Finger des Bergsteigers können somit im sicheren Abstand von der Öffnung 21 und dem Sicherungsmittel gehalten werden.

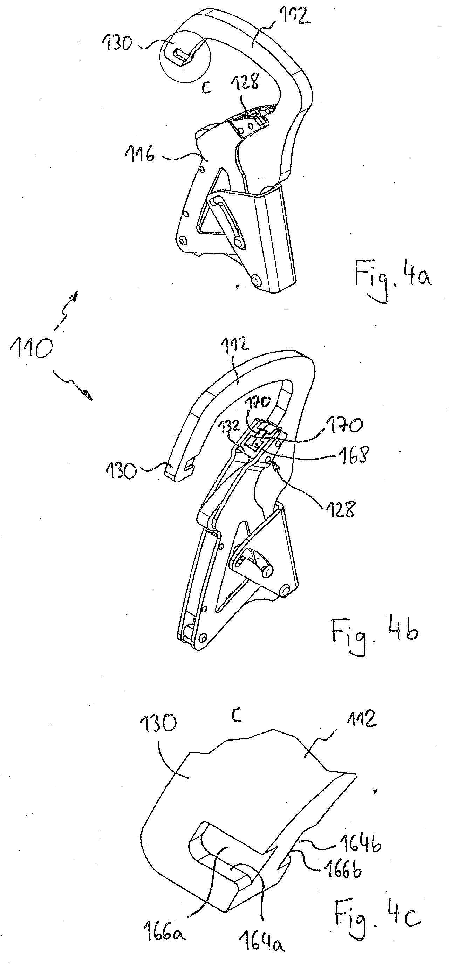

Unter Bezugnahme auf Figuren 4a bis 6c wird nachfolgend ein zweites Ausführungsbeispiel der Erfindung erläutert. Im folgenden werden nur die Unterschiede gegenüber dem ersten Ausführungsbeispiel erläutert. In Bezug auf alle übrigen, in den Zeichnungen des zweiten Ausführungsbeispiels erkennbaren Bauteile und Funktionen wird ausdrücklich auf die Beschreibung des ersten Ausführungsbeispiels hingewiesen.

Ein Karabiner 110 des zweiten Ausführungsbeispiels umfasst einen Hauptbügel 112 von allgemein hakenförmiger Gestaltung und einen den Hauptbügel 112 schließenden Schließhebel 116. Der Karabiner 110 des zweiten Ausführungsbeispiels unterscheidet sich von dem Karabiner 10 des ersten Ausführungsbeispiels in der Konfiguration des oberen freien Endes 128 des Schließhebels 116 und des freien Endes 130 des Hauptbügels 112. Während im ersten Ausführungsbeispiel die Nut 34 des freien Endes 30 des Hauptbügels 12 den Hauptbügel 12 in Y-Richtung vollständig durchsetzt, sind am freien Ende 130 des Hauptbügels 112 des zweiten Ausführungsbeispiels der Erfindung auf beiden Seiten jeweils flache Nuten 164a, 164b eingebracht, deren Nutböden 166a, 166b in Y-Richtung voneinander getrennt sind.

Am freien Ende 128 des Schließhebels 116 ist ein Schließteil 132 angeordnet, insbesondere zwischen den parallelen Platten des Schließhebels 116 aufgenommen. Das Schließteil 132 weist eine Aussparung 168 auf, deren Kontur an die Form des freien Endes 130 des Hauptbügels 112 angepasst ist und insbesondere zwei in Y-Richtung voneinander im Abstand angeordnete, aufeinander zu weisende Vorsprünge 170 umfasst, welche dafür ausgelegt sind, in die Nuten 164a, 164b des Hauptbügels 112 einzufahren.

In der Konfiguration des zweiten Ausführungsbeispiels sind Schließhebel 116 und Hauptbügel 112 in der geschlossenen Stellung des Karabiners 110 formschlüssig in Y-Richtung sowie in Z-Richtung miteinander verbunden und gegen Zug- bzw. Scherkräfte stabilisiert. Insbesondere können sich die Vorsprünge 170 an den Böden 166a, 166b der Nuten 164a, 164b abstützen, um Kräfte in Y-Richtung aufzunehmen, und können sich an den Wänden der Nuten 164a, 164b abstützen, um Zugkräfte in Z-Richtung aufzunehmen.

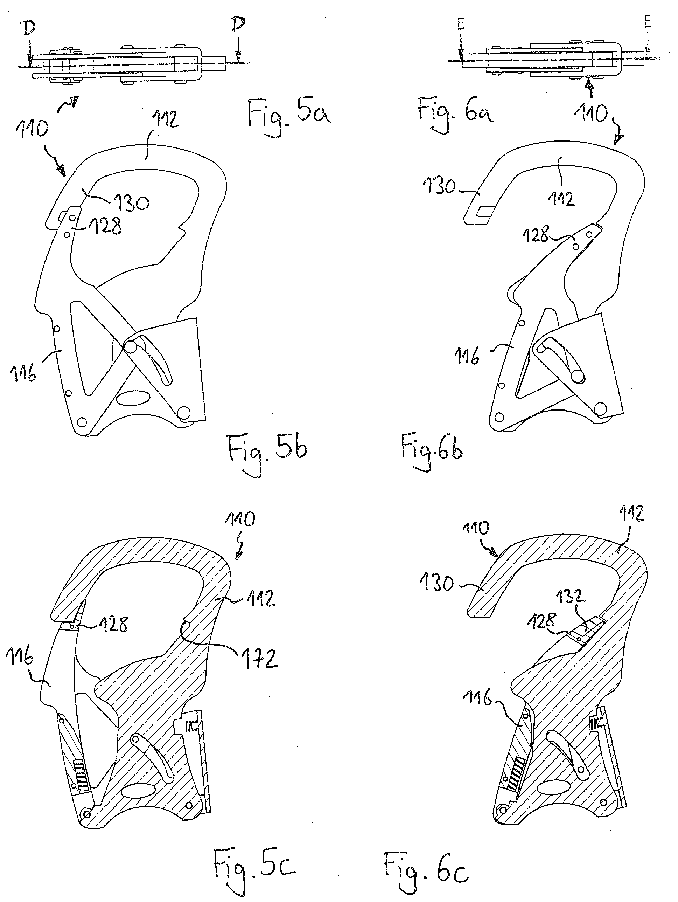

Ferner weist eine Innenseite des Hauptbügels 112 auf einem der Öffnung 121 des Karabiners 110 gegenüberliegenden Abschnitt eine Aussparung 172 (Figur 5c) auf, welche dafür angepasst ist, in der geöffneten Stellung des Karabiners 110 das freie Ende 128 des Schließhebels 116 passend aufzunehmen, so dass der Schließhebel 116 zusammen mit der Innenseite des Hauptbügels eine kontinuierliche, im Wesentlichen stufenfreie Ausweisungskontur zur störungsfreien Ausweisung eines Sicherungsmittels bildet.

## Patentansprüche

1. Klettersteigkarabiner (10; 110) zum Sichern eines Bergsteigers an einem bergseitigen Sicherungsmittel eines Klettersteigs, welcher Karabiner einen Hauptbügel (12; 112) und einen schwenkbar zu diesem gehaltenen Schließhebel (16; 116) umfasst, wobei der Schließhebel in einer geschlossenen Stellung des Karabiners eine Öffnung (21) des Hauptbügels schließt und in einer geöffneten Stellung des Karabiners zu einem Innenbereich (24) des Karabiners hin verschwenkt ist, um die Öffnung (21) des Hauptbügels zu öffnen,
wobei der Schließhebel (16; 116) einen Griffabschnitt (36) für mindestens einen Finger eines Benutzers aufweist, wobei jedenfalls in der geöffneten Stellung des Karabiners zwischen dem Griffabschnitt (36) und dem Innenbereich (24) des Karabiners eine Fingerbarriere (40; 42) angeordnet ist, welche dafür ausgelegt ist, ein Abgleiten des Fingers in den Innenbereich (24) des Karabiners zu verhindern **dadurch gekennzeichnet, dass** die Fingerbarriere auch dafür ausgelegt ist den Finger vor einem Kontakt mit einem aus dem Innenbereich (24) des Karabiners austretenden Sicherungsmittel zu schützen, und
dass in der geöffneten Stellung des Karabiners die Begrenzung (22) des Innenbereichs (24) des Karabiners eine Ausweisungskontur (50) aufweist, welche derart ausgebildet ist, dass das Sicherungsmittel beim Auskoppeln des Sicherungsmittels aus dem Innenbereich (24) über die Fingerbarriere (42) hinweg durch die Öffnung (21) des Karabiners ausgewiesen und sicher an den Fingern des Benutzers vorbei geführt wird.

2. Klettersteigkarabiner (10; 110) nach Anspruch 1,
**dadurch gekennzeichnet, dass** die Fingerbarriere (40) fest mit dem Griffabschnitt (36) verbunden ist.

3. Klettersteigkarabiner (10; 110) nach Anspruch 1 oder Anspruch 2,
**dadurch gekennzeichnet, dass** der Griffabschnitt (36) für die Anlage von mindestens zwei, vorzugsweise mindestens drei nebeneinanderliegenden Fingern eines Benutzers ausgelegt ist.

4. Klettersteigkarabiner (10; 110) nach einem der vorhergehenden Ansprüche,
**dadurch gekennzeichnet, dass** die Fingerbarriere (42) fest mit dem Hauptbügel (12; 112) verbunden ist.

5. Klettersteigkarabiner (10; 110) nach Anspruch 4,
**dadurch gekennzeichnet, dass** die Fingerbarriere (42) durch einen am Hauptbügel (12; 112) angeordneten Vorsprung gebildet ist, welcher zur Öffnung (21) des Hauptbügels (12; 112) oder zum Innenbereich (24) des Karabiners hin vorsteht.

6. Klettersteigkarabiner (10; 110) nach Anspruch 4 oder Anspruch 5,
**dadurch gekennzeichnet, dass** die Fingerbarriere (42) durch einen am Hauptbügel (12; 112) angeordneten Vorsprung gebildet ist, welcher in der geöffneten Stellung des Karabiners durch eine Aussparung des Schließhebels (16; 116) hindurchtritt.

7. Klettersteigkarabiner (10; 110) nach einem der vorhergehenden Ansprüche,
**dadurch gekennzeichnet, dass** die Fingerbarriere (40; 42) durch einen Vorsprung oder eine Stufe gebildet ist, welcher/welche kontinuierlich in die Ausweisungskontur (50) übergeht.

8. Klettersteigkarabiner (10; 110) nach einem der vorhergehenden Ansprüche,
ferner **gekennzeichnet durch** einen Sicherungshebel (20), welcher schwenkbar zum Hauptbügel (12; 112) gehalten ist, wobei der Sicherungshebel verstellbar ist, zwischen einer Sicherungsstellung, in der er eine Schwenkbewegung des Schließhebels (16; 116) von der geschlossenen Stellung in die geöffnete Stellung blockiert, und einer Freigabestellung, in der er eine Schwenkbewegung des Schließhebels (16; 116) von der geschlossenen Stellung in die geöffnete Stellung zulässt,
wobei in der geschlossenen und gesicherten Stellung des Karabiners
- sich ein Griffabschnitt (54) des Sicherungshebels (20) und ein Griffabschnitt (36) des Schließhebels (16; 116) parallel zueinander oder in einem Winkel von kleiner oder gleich ungefähr 15° zueinander erstrecken oder/und
- sich der Griffabschnitt (54) des Sicherungshebels (20) oder/und der Griffabschnitt (36) des Schließhebels (16; 116) in Bezug auf eine Hauptzugachse (H) des Karabiners von einem untere axialen Abschnitt des Karabiners zu einem mittleren axialen Abschnitt des Karabiners hin an die Hauptzugachse (H) annähert.

9. Klettersteigkarabiner (10; 110) nach einem der vorhergehenden Ansprüche,
ferner **gekennzeichnet durch** eine Gurtöffnung (35) zur Aufnahme eines Gurts, welche separat von dem Innenbereich (24) des Karabiners ausgebildet ist,
wobei in Bezug auf eine Hauptzugachse (H) des Karabiners die Gurtöffnung (35) zwischen dem Schwenkpunkt (14) des Schließhebels (16; 116) und dem Innenbereich (24) des Karabiners oder an gleicher axialer Position wie der Schwenkpunkt (14) des Schließhebels (16; 116) angeordnet ist.

10. Klettersteigkarabiner (10; 110) nach Anspruch 9,
ferner **gekennzeichnet durch** einen Sicherungshebel (20), welcher schwenkbar zum Hauptbügel (12; 112) gehalten ist, wobei der Sicherungshebel an einem Schwenkpunkt (18) verschwenkbar ist zwischen einer Sicherungsstellung, in der er eine Schwenkbewegung des Schließhebels (16; 116) von der geschlossenen Stellung in die geöffnete Stellung blockiert, und einer Freigabestellung, in der er eine Schwenkbewegung des Schließhebels (16; 116) von der geschlossenen Stellung in die geöffnete Stellung zulässt,
wobei in Bezug auf die Hauptzugachse (H) des Karabiners die Gurtöffnung (35) zwischen dem Schwenkpunkt (18) des Sicherungshebels (20) und dem Innenbereich (24) des Karabiners oder an gleicher axialer Position wie der Schwenkpunkt (18) des Sicherungshebels (20) angeordnet ist.

11. Klettersteigkarabiner (10; 110) nach einem der vorhergehenden Ansprüche,
**dadurch gekennzeichnet,**
**dass** in einer vollständig geöffneten Stellung des Karabiners ein freies Ende (28; 128) des Schließhebels (16; 116) an einer dem Schließhebel (16; 116) gegenüberliegenden Innenseite des Hauptbügels (12; 112) anschlägt, und
**dass** in einer vollständig geöffneten Stellung des Karabiners eine Begrenzungskontur (22), welche den Innenbereich (24) des Karabiners begrenzt, im Wesentlichen kontinuierlich von der Innenseite des Hauptbügels (12; 112) in eine Oberfläche (46) des freien Endes (28; 128) des Schließhebels (16; 116) übergeht.

12. Klettersteigkarabiner (10; 110) nach Anspruch 11,
**dadurch gekennzeichnet, dass** mindestens eines der beiden Elemente Schließhebel (16; 116) und Hauptbügel (12; 112) eine Aussparung (52; 172) aufweist, in welche ein Abschnitt (32; 128) des anderen der beiden Elemente beim Verschwenken des Schließhebels (16; 116) in die vollständig geöffnete Stellung eindringt.

13. Klettersteigkarabiner (10; 110) nach einem der vorhergehenden Ansprüche,
**dadurch gekennzeichnet, dass** der Karabiner einen Sicherungshebel (20) aufweist, welcher schwenkbar zum Hauptbügel (12; 112) gehalten ist, wobei der Sicherungshebel (20) verschwenkbar ist zwischen einer Sicherungsstellung, in der er eine Schwenkbewegung des Schließhebels (16; 116) von der geschlossenen Stellung in die geöffnete Stellung blockiert, und einer Freigabestellung, in der er eine Schwenkbewegung des Schließhebels (16; 116) von der geschlossenen Stellung in die geöffnete Stellung zulässt.

## Claims

1. Climbing carabiner (10;110) for securing a mountain climber to a securing means of a via ferrata on a mountain, which carabiner comprises a main bracket (12; 112) and a locking lever (16; 116) which is held so as to be pivotable relative to said main bracket, the locking lever closing an opening (21) in the main bracket when the carabiner is closed and being pivoted towards an inner region (24) of the carabiner when the carabiner is open in order to open the opening (21) in the main bracket, the locking lever (16; 116) comprising a grip portion (36) for at least one finger of a user, a finger barrier (40; 42) being arranged between the grip portion (36) and the inner region (24) of the carabiner, at least when the carabiner is open, which finger barrier is designed to prevent the finger from slipping into the inner region (24) of the carabiner, **characterised in that** the finger barrier is also designed to protect the finger from contact with a securing means that emerges from the inner region (24) of the carabiner, and **in that**, when the carabiner is open, the delimiting region (22) of the inner region (24) of the carabiner has an expelling contour (50) that is designed such that, when the securing means is uncoupled from the inner region (24), said securing means is expelled away over the finger barrier (42) and through the opening (21) in the carabiner and is guided safely past the finger of the user.

2. Climbing carabiner (10; 110) according to claim 1, **characterised in that** the finger barrier (40) is rigidly connected to the grip portion (36).

3. Climbing carabiner (10; 110) according to either claim 1 or claim 2, **characterised in that** the grip portion (36) is designed for the placement of at least two, preferably at least three, adjacent fingers of a user.

4. Climbing carabiner (10; 110) according to any of the preceding claims, **characterised in that** the finger barrier (42) is rigidly connected to the main bracket (12; 112).

5. Climbing carabiner (10; 110) according to claim 4, **characterised in that** the finger barrier (42) is formed by a projection on the main bracket (12; 112), which projection protrudes towards the opening (21) in the main bracket (12; 112) or towards the inner region (24) of the carabiner.

6. Climbing carabiner (10; 110) according to either claim 4 or claim 5, **characterised in that** the finger barrier (42) is formed by a projection on the main bracket (12; 112), which projection pushes into a recess in the locking lever (16; 116) when the carabiner is open.

7. Climbing carabiner (10; 110) according to any of the preceding claims, **characterised in that** the finger barrier (40; 42) is formed by a projection or a step which transitions continuously into the expelling contour (50).

8. Climbing carabiner (10; 110) according to any of the preceding claims, further **characterised by** a securing lever (20) which is held so as to be pivotable relative to the main bracket (12; 112), it being possible to move the securing lever between a securing position, in which said securing lever blocks a pivoting movement of the locking lever (16; 116) from the closed position into the open position, and a release position, in which said securing lever allows a pivoting movement of the locking lever (16; 116) from the closed position into the open position,
- a grip portion (54) of the securing lever (20) and a grip portion (36) of the locking lever (16; 116) extending in parallel with one another or at an angle of less than or equal to approximately 15°, and/or
- relative to a main tensile axis (H) of the carabiner, the grip portion (54) of the securing lever (20) and/or the grip portion (36) of the locking lever (16; 116) approach said main tensile axis (H) from a lower axial portion of the carabiner towards a central axial portion of the carabiner
in the closed and secured position of the carabiner.

9. Climbing carabiner (10; 110) according to any of the preceding claims, further **characterised by** a harness opening (35) for receiving a harness, which harness opening is separate from the inner region (24) of the carabiner, the harness opening (35) being arranged, relative to a main tensile axis (H) of the carabiner, between the pivot point (14) of the locking lever (16; 116) and the inner region (24) of the carabiner or at the same axial position as the pivot point (14) of the locking lever (16; 116).

10. Climbing carabiner (10; 110) according to claim 9, further **characterised by** a securing lever (20) which is held so as to be pivotable relative to the main bracket (12; 112), it being possible, at a pivot point (18), to pivot the securing lever between a securing position, in which said securing lever blocks a pivoting movement of the locking lever (16; 116) from the closed position into the open position, and a release position, in which said securing lever allows a pivoting movement of the locking lever (16; 116) from the closed position into the open position, the harness opening (35) being arranged, relative to the main tensile axis (H) of the carabiner, between the pivot point (18) of the securing lever (20) and the inner region (24) of the carabiner or at the same axial position as the pivot point (18) of the securing lever (20).

11. Climbing carabiner (10; 110) according to any of the preceding claims, **characterised in that**, when the carabiner is completely open, a free end (28; 128) of the locking lever (16; 116) strikes an inner face of the main bracket (12; 112) that is opposite the locking lever (16; 116), and **in that**, when the carabiner is completely open, a delimiting contour (22), which delimits the inner region (24) of the carabiner, transitions substantially continuously from the inner face of the main bracket (12; 112) into a surface (46) of the free end (28; 128) of the locking lever (16; 116).

12. Climbing carabiner (10; 110) according to claim 11, **characterised in that** at least one of the two elements, namely the locking lever (16; 116) and the main bracket (12; 112), comprises a recess (52; 172) into which a portion (32; 128) of the other of the two elements penetrates when the locking lever (16; 116) is pivoted into the completely open position.

13. Climbing carabiner (10; 110) according to any of the preceding claims, **characterised in that** the carabiner comprises a securing lever (20) which is held so as to be pivotable relative to the main bracket (12; 112), it being possible to pivot the securing lever (20) between a securing position, in which said securing lever blocks a pivoting movement of the locking lever (16; 116) from the closed position into the open position, and a release position, in which said securing lever allows a pivoting movement of the locking lever (16; 116) from the closed position into the open position.

## Revendications

1. Mousqueton de via ferrata (10 ; 110) pour assurer un grimpeur à un moyen de sécurité côté amont d'une via ferrata, lequel mousqueton comprend un arceau principal (12 ; 112) et un levier de verrouillage (16 ; 116) maintenu pivotable par rapport à celui-ci, dans lequel le levier de verrouillage ferme une ouverture (21) de l'arceau principal dans une position fermée du mousqueton et, dans une position ouverte du mousqueton, est pivoté vers une zone intérieure (24) du mousqueton afin d'ouvrir l'ouverture (21) de l'arceau principal,
dans lequel le levier de verrouillage (16 ; 116) présente une section de saisie (36) pour au moins un doigt d'un utilisateur,
dans lequel, en tout cas en position ouverte du mousqueton, une barrière pour doigt (40 ; 42) est disposée entre la section de saisie (36) et la zone intérieure (24) du mousqueton, laquelle barrière pour doigt est conçue pour empêcher un dérapage du doigt dans la zone intérieure (24) du mousqueton, **caractérisé en ce que** la barrière pour doigt est également conçue pour protéger le doigt d'un contact avec un moyen de sécurité sortant de la zone intérieure (24) du mousqueton, et
**en ce que**, en position ouverte du mousqueton, la délimitation (22) de la zone intérieure (24) du mousqueton présente un contour d'expulsion (50) lequel est réalisé de sorte que, lors du découplage du moyen de sécurité, le moyen de sécurité soit expulsé de la zone intérieure (24) via la barrière pour doigt (42) à travers l'ouverture (21) du mousqueton et soit amené devant les doigts de l'utilisateur en toute sécurité.

2. Mousqueton de via ferrata (10 ; 110) selon la revendication 1,
**caractérisé en ce que** la barrière pour doigt (40) est solidement reliée à la section de saisie (36).

3. Mousqueton de via ferrata (10 ; 110) selon la revendication 1 ou la revendication 2, **caractérisé en ce que** la section de saisie (36) est conçue pour le placement d'au moins deux, de préférence au moins trois doigts côte à côte d'un utilisateur.

4. Mousqueton de via ferrata (10 ; 110) selon l'une quelconque des revendications précédentes,
**caractérisé en ce que** la barrière pour doigt (42) est solidement reliée à l'arceau principal (12 ; 112).

5. Mousqueton de via ferrata (10 ; 110) selon la revendication 4,
**caractérisé en ce que** la barrière pour doigt (42) est formée par une saillie disposée sur l'arceau principal (12 ; 112), laquelle dépasse vers l'ouverture (21) de l'arceau principal (12 ; 112) ou vers la zone intérieure (24) du mousqueton.

6. Mousqueton de via ferrata (10 ; 110) selon la revendication 4 ou la revendication 5, **caractérisé en ce que** la barrière pour doigt (42) est formée par une saillie disposée sur l'arceau principal (12; 112), laquelle, en position ouverte du mousqueton, traverse un évidement du levier de verrouillage (16 ; 116).

7. Mousqueton de via ferrata (10 ; 110) selon l'une quelconque des revendications précédentes,
**caractérisé en ce que** la barrière pour doigt (40 ; 42) est formée par une saillie ou un niveau, laquelle/lequel est en continuité avec le contour d'expulsion (50).

8. Mousqueton de via ferrata (10 ; 110) selon l'une quelconque des revendications précédentes,
en outre **caractérisé par** un levier de sécurité (20), lequel est fixé à l'arceau principal (12 ; 112) de manière pivotante, dans lequel le levier de verrouillage est réglable, entre une position de sécurité, dans laquelle il bloque un mouvement de pivotement du levier de verrouillage (16 ; 116) de la position fermée à la position ouverte, et une position de déverrouillage, dans laquelle il autorise un mouvement de pivotement du levier de verrouillage (16 ; 116) de la position fermée à la position ouverte,
dans lequel, en position fermée et sécurisée du mousqueton
- une section de saisie (54) du levier de sécurité (20) et une section de saisie (36) du levier de verrouillage (16 ; 116) s'étendent parallèlement l'un par rapport à l'autre ou s'étendent l'un par rapport à l'autre dans un angle inférieur ou égal à environ 15° et/ou,
- la section de saisie (54) du levier de sécurité (20) et/ou la section de saisie (36) du levier de verrouillage (16 ; 116), par rapport à un axe de traction principal (H) du mousqueton, se rapproche d'une section axiale inférieure du mousqueton vers une section axiale moyenne du mousqueton, sur l'axe de traction principal (H).

9. Mousqueton de via ferrata (10 ; 110) selon l'une quelconque des revendications précédentes,
en outre **caractérisé par** un passage de sangle (35) pour loger une sangle, qui est réalisé séparément de la zone intérieure (24) du mousqueton,
dans lequel, par rapport à un axe de traction principal (H) du mousqueton, le passage de sangle (35) est disposé entre le point de pivot (14) du levier de verrouillage (16 ; 116) et la zone intérieure (24) du mousqueton ou au niveau d'une position axiale identique comme le point de pivot (14) du levier de verrouillage (16 ; 116).

10. Mousqueton de via ferrata (10 ; 110) selon la revendication 9,
en outre **caractérisé par** un levier de sécurité (20), lequel est fixé à l'arceau principal (12 ; 112) de manière pivotante, dans lequel le levier de sécurité est pivotable sur un point de pivot (18) entre une position de sécurité dans laquelle il bloque un mouvement de pivotement du levier de verrouillage (16 ; 116) de la position fermée à la position ouverte, et une position de déverrouillage, dans laquelle il autorise un mouvement de pivotement du levier de verrouillage (16 ; 116) de la position fermée à la position ouverte,
dans lequel, par rapport à l'axe de traction principal (H) du mousqueton, le passage de sangle (35) est disposé entre le point de pivot (18) du levier de sécurité (20) et la zone intérieure (24) du mousqueton ou au niveau d'une position axiale identique comme le point de pivot (18) du levier de sécurité (20).

11. Mousqueton de via ferrata (10 ; 110) selon l'une quelconque des revendications précédentes,
**caractérisé en ce**
**que** dans une position complètement ouverte du mousqueton, une extrémité libre (28 ; 128) du levier de verrouillage (16 ; 116) butte contre un côté intérieur de l'arceau principal (12 ; 112) opposé au levier de verrouillage (16 ; 116), et
**que** dans une position complètement ouverte du mousqueton, un contour de délimitation (22), lequel délimite la zone intérieure (24) du mousqueton, est sensiblement dans la continuité avec le côté intérieur de l'arceau principal (12 ; 112) dans une surface (46) de l'extrémité libre (28 ; 128) du levier de verrouillage (16 ; 116).

12. Mousqueton de via ferrata (10 ; 110) selon la revendication 11,
**caractérisé en ce qu'**au moins un des deux éléments, levier de verrouillage (16 ; 116) et arceau principal (12; 112), présente un évidement (52; 172), dans lequel une section (32 ; 128) de l'autre des deux éléments s'introduit dans la position complètement ouverte lors du pivotement du levier de verrouillage (16 ; 116).

13. Mousqueton de via ferrata (10 ; 110) selon l'une quelconque des revendications précédentes,
**caractérisé en ce que** le mousqueton présente un levier de sécurité (20), lequel est fixé à l'arceau principal (12 ; 112) de manière pivotante, dans lequel le levier de sécurité (20) est pivotable entre une position de sécurité, dans laquelle il bloque un mouvement de pivotement du levier de verrouillage (16 ; 116) de la position fermée à la position ouverte, et une position de déverrouillage, dans laquelle il autorise un mouvement de pivotement du levier de verrouillage (16 ; 116) de la position fermée à la position ouverte.
